# FASCICULE DE BREVET EUROPEEN

(11) **EP 3 727 872 B1**
(45) Date de publication et mention de la délivrance du brevet: **16.02.2022**
(21) Numéro de dépôt: 18830789.6
(22) Date de dépôt: 18.12.2018
(51) Int. Cl.: G03H 1/02, B42D 25/355, B42D 25/373, B42D 25/351, B42D 25/328, G03H 1/00

(54) **COMPOSANT OPTIQUE DE SECURITE VISIBLE EN REFLEXION, FABRICATION D'UN TEL COMPOSANT ET DOCUMENT SECURISÉ EQUIPÉ D'UN TEL COMPOSANT**
OPTISCHE, BEI REFLEKTION SICHTBARE SICHERHEITSKOMPONENTE, HERSTELLUNG SOLCH EINER KOMPONENTE UND SICHERES DOKUMENT MIT SOLCH EINER KOMPONENTE
OPTICAL SECURITY COMPONENT VISIBLE IN REFLECTION, MANUFACTURE OF SUCH A COMPONENT, AND SECURE DOCUMENT PROVIDED WITH SUCH A COMPONENT

(30) Priorité: 19.12.2017 FR 1762536
(43) Date de publication de la demande: 28.10.2020
(73) Titulaire: SURYS, 77600 Bussy-Saint-Georges (FR)
(72) Inventeur: PETITON, Valéry, 77100 Meaux (FR)
(74) Mandataire: Osha Liang
(86) Numéro de dépôt international: PCT/EP2018/085670
(87) Numéro de publication internationale: WO 2019/121798

(56) Documents cités:
- WO-A1-2015/181289
- WO-A1-2017/184581
- FR-A1- 3 051 565

## Description

### DOMAINE TECHNIQUE

La présente description concerne le domaine du marquage de sécurité. Plus particulièrement, elle se rapporte à un composant optique de sécurité visible en réflexion pour vérifier l'authenticité d'un document, à un procédé de fabrication d'un tel composant et à un document sécurisé équipé d'un tel document.

### ETAT DE L'ART

On connaît de nombreuses technologies pour l'authentification d'objets tels que des documents ou des produits, et notamment pour l'authentification de documents de valeur tels que des billets de banque, des passeports ou autres documents d'identification. Ces technologies visent à la production de composants optiques de sécurité dont les effets optiques en fonction des paramètres d'observation (orientation du composant par rapport à l'axe d'observation, position et dimensions de la source lumineuse, etc.) prennent des configurations caractéristiques et vérifiables. Le but général de ces composants optiques est de fournir des effets optiques nouveaux et différenciés, à partir de configurations physiques difficilement reproductibles. Parmi ces composants, on appelle DOVID pour "Diffractive Optical Variable Image Device", les composants optiques produisant des images diffractives et variables que l'on appelle communément les hologrammes.

Il est connu par exemple de générer un effet consistant en une variation dynamique d'un effet optique, par exemple sous forme de déplacement dans une direction donnée d'une zone lumineuse et/ou colorée, le déplacement résultant d'une variation de l'angle de tilt de composant. De tels effets sont décrits par exemple dans les demandes de brevet publiées FR3019497 ou FR3066954 au nom de la déposante. Un observateur peut alors observer une zone lumineuse et/ou colorée qui se déplace le long d'une image lorsqu'il fait tourner le composant, ce qui constitue un contrôle d'authentification supplémentaire.

La présente demande décrit un composant optique de sécurité avec une structure originale permettant d'accéder à un effet visuel d'animation, ou de « scénario animé » en 2 étapes, pour permettre de produire un effet visuel facile à décrire et simple à mémoriser et/ou à contrôler. Un tel composant est donc facile à reconnaître, et au final assure une authentification très robuste.

### RESUME

Selon un premier aspect, l'invention concerne un composant optique de sécurité destiné à être observé en réflexion, à l'œil nu, dans une bande sceptrale d'observation selon au moins une première face d'observation.

Le composant optique de sécurité selon le premier aspect comprend :
- une première couche en matériau diélectrique, au moins partiellement transparente dans le visible, présentant un premier indice de réfraction, ladite première couche comprenant au moins une première région uniformément microstructurée pour former une première microstructure diffractive;
- au moins une première couche réflective métallique, déposée sur ladite au moins une première région microstructurée et formant un ou plusieurs éléments réfléchissants opaques, chaque élément réfléchissant opaque formant un trait avec une largeur strictement inférieure à 1 mm , l'ensemble comprenant le ou les éléments réfléchissants opaques formant un premier élément graphique reconnaissable;
- au moins une première couche réflective transparente, en matériau diélectrique, présentant un deuxième indice de réfraction, déposée sur ladite au moins une première région microstructurée et formant un ou plusieurs éléments réfléchissants transparents, une dimension minimale de chaque élément réfléchissant transparent étant supérieure à 2 mm , l'ensemble comprenant le ou les éléments réfléchissants transparents formant un deuxième élément graphique reconnaissable;
- une couche de fermeture, en matériau diélectrique, au moins partiellement transparente dans le visible, présentant un troisième indice de réfraction proche du premier indice de réfraction, recouvrant ladite première couche et lesdites au moins une première couche réflective métallique et au moins une première couche réflective transparente, de telle sorte que ladite couche de fermeture soit en contact direct avec ladite première couche dans toutes les zones de ladite première couche sans éléments réfléchissants opaques ou transparents,
- le composant optique de sécurité présentant en réflexion, un effet visuel dynamique obtenu par rotation en tilt du composant.

Au sens de la présente description, des indices de réfraction sont dits « proches » lorsque la différence entre lesdits indices de réfraction est strictement inférieure à 0,3, avantageusement strictement inférieur à 0,1.

Ladite au moins une couche réflective métallique est discontinue pour former le ou lesdits éléments réfléchissants opaques.

Selon la présente description, chaque élément réfléchissant opaque forme un trait avec une largeur strictement inférieure à 1 mm, de préférence strictement inférieure à 600 µm, de préférence strictement inférieure à 300 µm, ce qui correspond au pouvoir de résolution de l'œil. La largeur du trait est cependant de préférence supérieure à 50 µm pour être visible.

L'ensemble comprenant le ou les élément(s) réfléchissant(s) opaque(s) forme ainsi un élément graphique reconnaissable défini par son contour, par exemple une ou plusieurs lignes, une forme creuse, et de manière générale toute forme de « dessin au trait » ou d'objet essentiellement défini par son contour.

Selon un ou plusieurs exemples de réalisation, la densité de surface du ou des élément(s) réfléchissant(s) opaque(s) dans ladite au moins une première région est inférieure à 30%, de préférence inférieure à 10%. La densité de surface (DF) d'un élément réfléchissant est localement définie par le rapport de la surface de l'élément réfléchissant par unité de surface pour une unité de surface de référence donnée, par exemple une unité de surface supérieure à 5 mm², avantageusement supérieure à 25 mm².

Selon un ou plusieurs exemples de réalisation, ladite au moins une couche réflective métallique résulte du dépôt d'une première couche métallique par exemple un dépôt sous vide. Par exemple, la couche réflective métallique est une couche d'aluminium d'épaisseur comprise entre 10 et 50 nm, de préférence 15 à 40 nm, de préférence entre 20 et 25 nm, ou une couche d'un autre métal d'épaisseur comparable pour donner une opacité équivalente.

Selon un ou plusieurs exemples de réalisation, ledit composant optique de sécurité comprend au moins une deuxième couche réflective métallique, résultant par exemple du dépôt d'une deuxième couche métallique différente de la première couche métallique. La présence de deux couches réflectives métalliques différentes peut permettre de générer des effets de contraste de la couleur perçue pour chacune des couches métalliques sous certains angles d'observation.

Ladite au moins une première couche réflective transparente est définie comme une couche présentant une transmission d'au moins 70%, de préférence au moins 80% pour une longueur d'onde comprise dans la bande spectrale d'observation.

Ladite au moins une couche réflective transparente est discontinue pour former le ou lesdits éléments réfléchissants transparents.

Selon la présente description, la plus petite dimension de chaque élément réfléchissant transparent (ou « dimension minimale ») est strictement supérieure à 2 mm. Avantageusement, une dimension minimale de chaque élément réfléchissant transparent est supérieure à 3 mm.

Avantageusement, la plus petite dimension de chaque élément réfléchissant transparent est supérieure ou égale à 2 fois, avantageusement supérieure ou égale à 3 fois, la dimension la plus petite de chacun des éléments réfléchissants opaques.

L'ensemble comprenant le ou les élément(s) réfléchissant(s) transparent(s) forme ainsi un élément graphique reconnaissable, par exemple un objet graphique essentiellement défini par sa forme et sa texture de surface ou son aplat de lumière lorsque l'effet optique est visible. L'élément réfléchissant transparent est aussi appelé « forme pleine » dans la présente description.

Selon un ou plusieurs exemples de réalisation, dans ladite au moins une première région, il existe au moins une zone de référence dans laquelle la densité de surface du ou des élément(s) réfléchissant(s) transparent(s) est supérieure à 30%, de préférence supérieure à 60%, de préférence supérieure à 95%.

Selon un ou plusieurs exemples de réalisation, ladite au moins une couche réflective transparente présente un deuxième indice de réfraction tel que la différence entre le premier indice de réfraction et le deuxième indice de réfraction soit supérieure ou égale à 0,3, avantageusement supérieure à 0,5.

Ladite au moins une couche réflective transparente résulte par exemple du dépôt d'une couche en matériau diélectrique transparent, par exemple un dépôt sous vide, par exemple une couche de sulfure de zinc (ZnS), d'épaisseur comprise entre 40 et 130 nm, de préférence entre 60 et 120 nm. D'autres exemples de matériaux pour la formation de la couche réflective transparente sont connus et divulgués, par exemple dans le brevet US4856857.

Un composant optique de sécurité selon le premier aspect présente, en réflexion, un effet visuel dynamique. Une observation en réflexion s'entend d'une observation dans laquelle la source et l'observateur (ou l'outil de contrôle le cas échéant) sont positionnés du même côté par rapport au plan du composant optique de sécurité.

L'effet visuel dynamique résulte d'une observation en réflexion en 2 étapes, permettant d'afficher un premier « message » puis un second « message » qui peut compléter le premier message, ces 2 étapes étant obtenues par basculement du document portant le composant optique suivant un des axes du document, de préférence suivant un axe de tilt (axe de basculement autour d'un axe horizontal dans le plan du composant).

Chaque « message » est compris comme un motif graphique reconnaissable en tant que tel, par exemple un objet, un texte, un symbole.

En effet, sur une première région, l'ensemble formé du ou des élément(s) réfléchissant(s) opaque(s), du fait de l'opacité de la couche réflective métallique, est visible par un observateur quel que soit l'angle d'observation. L'ensemble forme un motif graphique qui apparait « sombre » pour un observateur, c'est-à-dire toujours contrasté quelles que soient les conditions d'observation. Cette observation forme le premier message. En fonction de la nature de la microstructure, le ou les élément(s) réfléchissant(s) opaque(s) présentent aussi des effets visuels colorés à d'autres angles d'observation. A ce ou ces autres angles d'observation, l'ensemble formé du ou des élément(s) réfléchissant(s) transparent(s) présentera également un effet coloré qui ne sera pas visible en dehors de ce ou de ces angles d'observation spécifique. Ainsi, par rotation du composant optique de sécurité, on verra apparaître le « deuxième message » résultant d'une réflexion colorée à la fois par les éléments réfléchissants opaques et les éléments réfléchissants transparents, à un ou plusieurs angles d'observation spécifiques.

L'angle de tilt pour l'observation est par exemple de +/- 45°, de préférence +/-30° autour d'une position nominale d'observation. La position nominale d'observation est définie par exemple pour une observation sous éclairage vertical, par un composant incliné de telle sorte à présenter un angle de 45° entre la normale au composant et la direction verticale.

En dehors des éléments réfléchissants opaques et des éléments réfléchissants transparents, la première microstructure est invisible pour un observateur du fait de la proximité des indices de réfraction de la première couche et de la couche de fermeture et du fait de l'absence de couche réflective. L'observation dans les zones de la première microstructure sans éléments réfléchissants dépend ainsi des caractéristiques naturellement absorbantes ou diffusantes d'un substrat sur lequel est destiné à être apposé le composant optique de sécurité. Le contraste mat/brillant fort ainsi obtenu facilite l'authentification.

Selon un ou plusieurs exemples de réalisation, dans ladite au moins une première région, ladite au moins une première couche réflective métallique et ladite au moins une première couche réflective transparente se recouvrent partiellement, de telle sorte qu'au moins un élément réfléchissant opaque et un élément réfléchissant transparent soient partiellement superposés.

Selon un ou plusieurs exemples de réalisation, dans ladite au moins une première région, ladite au moins une première couche réflective métallique et ladite au moins une première couche réflective transparente sont localement juxtaposées, de telle sorte qu'au moins un élément réfléchissant opaque et un élément réfléchissant transparent soient localement juxtaposés.

La superposition partielle et/ou la juxtaposition locale d'un élément réfléchissant opaque et d'un élément réfléchissant transparent permet d'augmenter la sécurité du document ou du produit à sécuriser en rendant la falsification encore plus complexe. En effet, pour un contrefacteur agissant dans le cadre d'une simulation par transfert sélectif d'un composant sur un substrat, il serait extrêmement difficile de faire coïncider une dépose sélective de l'élément transparent avec le positionnement de l'élément réfléchissant métallique tout en conservant la continuité de l'effet optique dû à la microstructure sur l'ensemble des 2 éléments supportés par les couches réfléchissantes opaque et transparente.

Selon la présente description, ladite première microstructure est uniforme sur ladite première région. Par uniforme, on comprend que ladite au moins une première région est continument microstructurée sur toute sa surface. On pourra ainsi définir une première région par une première microstructure uniforme. Cette uniformité de la microstructure pourra être constatée notamment aux endroits de superposition/jonction des éléments réfléchissants.

Selon l'invention, ladite première microstructure comprend un premier réseau de diffraction, ledit réseau peut être unidimensionnel ou bidimensionnel.

Le premier réseau peut présenter un profil sinusoïdal, quasi sinusoïdal rectangulaire, dissymétrique par rapport au plan du composant, etc.

Selon un ou plusieurs exemples de réalisation, le premier réseau de diffraction est adapté pour former une microstructure diffractante à un ordre non nul, par exemple à l'ordre ±1 ou à un ordre supérieur. Le premier réseau comprend une période comprise entre 300 nm et 5 µm, de préférence entre 300 nm et 3 µm.

Selon un ou plusieurs exemples de réalisation, le premier réseau de diffraction est adapté pour former une microstructure diffractante à l'ordre zéro. Plus précisément, le premier réseau de diffraction est un réseau périodique unidimensionnel ou bidimensionnel, de période comprise entre 150 nm et 500 nm, avantageusement entre 200 nm et 400 nm, et qui se comporte dans le visible comme un réseau dit « sub longueur d'onde » c'est-à-dire de période inférieure à la plus petite longueur d'onde utilisée pour observer le composant. Le réseau est déterminé pour produire, après dépôt de la couche réfléchissante métallique ou transparente, un filtre résonant dans une bande spectrale déterminée en fonction notamment des caractéristiques du réseau.

Ainsi, selon un premier exemple de réalisation, le premier réseau permet de former au niveau des éléments réfléchissants transparents un filtre soustractif en longueur d'onde, appelé dans la suite de la description « *filtre résonant soustractif diélectrique* ». Un exemple d'un tel filtre est par exemple le DID^{™} (pour « Diffractive Identitification Device »), fabriqué par la déposante. Le premier réseau sub longueur d'onde, à une ou deux dimensions, est dans cet exemple adapté pour permettre l'excitation de modes guidés au sein de la couche réfléchissante transparente, formant un filtre résonant passe bande en réflexion, dont la bande spectrale de résonance est centrée sur une longueur d'onde déterminée en fonction des caractéristiques du réseau et des natures des couches. La couche réfléchissante transparente comprend une couche mince, d'épaisseur préférentiellement comprise entre 20 nm et 200 nm et préférentiellement entre 60 nm et 150 nm, présentant un deuxième indice de réfraction tel que le deuxième indice de réfaction diffère du premier indice de réfraction de la première couche et du troisième indice de réfraction de la couche de fermeture d'au moins 0,3, avantageusement d'au moins 0,5. Selon un ou plusieurs exemples de réalisation, ladite couche mince en matériau diélectrique est une couche en matériau dit « haut indice » de réfraction (ou « HRI » pour « High Refractive Index »), présentant un indice de réfraction compris entre 1,8 et 2,9, avantageusement entre 2,0 et 2,4 et les première et troisième couches en matériau diélectrique, de part et d'autre de la deuxième couche, sont des couches dites « bas indice » de réfraction, présentant des indices de réfraction compris entre 1,3 et 1,8, avantageusement entre 1,4 et 1,7. Un tel filtre résonant soustractif diélectrique est décrit par exemple dans le brevet FR2509873B1.

Selon un autre exemple de réalisation, le premier réseau permet de former au niveau des éléments réfléchissants opaques un filtre résonant coupe-bande en réflexion. Il s'agit d'un filtre plasmonique en réflexion, appelé « R'plasmon » dans la présente description, et tel que décrit par exemple dans la demande brevet EP2771724 ou dans la demande de brevet EP3099513. Pour ce faire, la couche réfléchissante métallique comprend une couche mince en matériau métallique, par exemple de l'argent ou de l'aluminium, avantageusement d'épaisseur supérieure à 40 nm. Avantageusement, la couche réfléchissante métallique est suffisamment épaisse pour présenter une transmission maximale résiduelle en fonction de la longueur d'onde de 2%.

Selon un autre exemple de réalisation, le premier réseau permet de former au niveau des éléments réfléchissants opaques un filtre résonant coupe-bande en transmission et en réflexion. Il s'agit d'un filtre plasmonique appelé « T'plasmon » dans la présente description, et tel que décrit par exemple dans la demande brevet EP2695006 au nom de la déposante.

Selon un ou plusieurs exemples de réalisation, ledit premier réseau de diffraction est constant sur ladite première région. Par réseau constant sur la première région, on comprend que l'ensemble des paramètres du réseau (e.g. période, profondeur du réseau, forme du réseau, profil, rapport de forme, orientation du vecteur réseau), sont constants.

Selon un ou plusieurs exemples de réalisation, ladite première microstructure comprend une première structure diffractive formée d'un bas-relief configuré pour simuler un effet visuel dynamique, par exemple le défilement d'un objet visuel graphique par un mouvement de tilt du composant optique de sécurité.

Par exemple, ladite première structure diffractive est formée d'un bas-relief comprenant un ensemble de facettes dont les formes sont déterminées pour générer une pluralité d'éléments réflectifs cylindriques concaves ou convexes vu de la face d'observation, lesdits éléments réflectifs cylindriques présentant une direction principale parallèle à l'axe du cylindre. La première microstructure présente un effet visuel dynamique de « bandes lumineuses défilantes » lorsqu'il subit une rotation en tilt autour d'un axe parallèle à la direction principale des éléments réflectifs cylindriques. Cet effet est décrit plus en détails dans le brevet FR3019497 au nom de la déposante.

Selon un autre exemple, ladite première structure diffractive est formée de plusieurs « modules » diffractifs agencés côte à côte, chaque module diffractif comprenant comme dans l'exemple précédent un bas-relief avec un ensemble de facettes dont les formes sont déterminées pour simuler un élément optique visible en réflexion, avec au moins une région convexe et/ou au moins une région concave. La deuxième microstructure présente en réflexion et sous l'effet d'un mouvement de tilt autour d'un axe parallèle à ladite direction d'agencement des modules, un effet visuel dynamique comprenant le mouvement d'un ou plusieurs éléments graphiques complexes. Cet effet est décrit plus en détails dans le brevet FR3066954 au nom de la déposante.

Selon un ou plusieurs exemples de réalisation, ladite première microstructure comprend une première structure diffractive telle que décrite ci-dessus, modulée par un premier réseau diffractif, tel que décrit ci-dessus.

D'autres exemples de premières microstructures adaptées au composant optique selon la présente description sont connus et décrits par exemple dans les brevets EP2567270, US5808776, WO2017025277.

Selon un ou plusieurs exemples de réalisation, ladite première couche comprend au moins une deuxième région uniformément microstructurée pour former une deuxième microstructure. Ladite au moins une première couche réflective métallique est déposée sur ladite au moins une deuxième région microstructurée pour former un ou plusieurs éléments réfléchissants opaques, chaque élément réfléchissant opaque formant un trait avec une largeur strictement inférieure à 1 mm, avantageusement strictement inférieur à 600 µm, avantageusement strictement inférieur à 300 µm. Ladite au moins une première couche réflective transparente est déposée sur ladite au moins une deuxième région microstructurée pour former un ou plusieurs éléments réfléchissants transparents, une dimension minimale de chaque élément réfléchissant transparent étant supérieure à 2 mm, avantageusement supérieure à 3 mm.

Avec plusieurs régions comprenant chacune une microstructure qui peut être différente de celle des autres, on peut obtenir un effet visuel complexe.

Selon un ou plusieurs exemples de réalisation, les microstructures de chacune des régions sont distinctes les unes des autres, optionnellement séparées par une zone non structurée. Par ailleurs, selon un ou plusieurs exemples de réalisation, les éléments réfléchissants opaques et/ou transparents présents sur une région ne s'étendent pas sur une région voisine, ce qui permet d'isoler les « messages » de chacune des régions.

Selon un ou plusieurs exemples de réalisation, le composant optique de sécurité est adapté à la sécurisation d'un document ou d'un produit, et comprend en outre, sur la face opposée à la face d'observation, une couche adaptée pour le transfert du composant sur le document ou le produit, par exemple une couche adhésive ou une couche d'adhésif réactivable.

Selon un ou plusieurs exemples de réalisation, le composant optique de sécurité comprend en outre, du côté de la face d'observation, un film support destiné à être détaché après transfert du composant sur le document ou le produit.

Selon un ou plusieurs exemples de réalisation, le composant optique de sécurité est adapté à la fabrication d'un fil de sécurité pour la sécurisation des billets de banque, et comprend du côté de la face d'observation et/ou sur la face opposée à la face d'observation, une ou plusieurs couches de protection.

Le composant optique de sécurité selon le premier aspect peut comprendre une ou plusieurs couches additionnelles transparentes en fonction des besoins de l'application, sans que cette ou ces couches additionnelles ne contribuent à l'effet visuel recherché.

Selon un deuxième aspect, la présente description concerne un objet sécurisé, par exemple un document de valeur sécurisé, comprenant un substrat et le composant optique de sécurité selon le premier aspect agencé sur ledit substrat. Le document de valeur est par exemple un billet de banque, un passeport, un visa, un permis de conduire, une carte d'identité par exemple en matériau polymère ou tout document d'identification. Le substrat comprend par exemple du polycarbonate, du PVC, du PET, du papier, une feuille cartonnée, etc. Le composant optique de sécurité selon le premier aspect peut également être apposé sur un produit susceptible de subir une tentative de falsification ou de contrefaçon qu'un produit de marque, un alcool, un composant électrique. Dans ce cas le composant optique pourra être délivré sous forme d'étiquette adhésive potentiellement destructible telle que connue par l'homme du métier.

Selon un troisième aspect, la présente description concerne des procédés de fabrication de composants optiques de sécurité selon le premier aspect.

Ainsi, la présente description concerne un procédé de fabrication d'un composant optique de sécurité destiné à être observé en réflexion, à l'œil nu, selon une face d'observation, le procédé comprenant :
- une étape de formation d'une première couche en matériau diélectrique, au moins partiellement transparente dans le visible, présentant un premier indice de réfraction, ladite première couche étant uniformément microstructurée dans au moins une première région pour former une première microstructure diffractive;
- une étape de dépôt localisé d'au moins une première couche réflective métallique pour former un ou plusieurs éléments réfléchissants opaques, chaque élément réfléchissant opaque formant un trait avec une largeur strictement inférieure à 1 mm, l'ensemble comprenant le ou les éléments réfléchissants opaques formant un premier élément graphique reconnaissable;
- une étape de dépôt localisé d'au moins une couche réflective transparente en matériau diélectrique, présentant un deuxième indice de réfraction, pour former un ou plusieurs éléments réfléchissants transparents, une dimension minimale de chaque élément réfléchissant transparent étant supérieure à 2 mm, l'ensemble comprenant le ou les éléments réfléchissants transparents formant un deuxième élément graphique reconnaissable;
- une étape de dépôt d'une couche de fermeture, en matériau diélectrique, au moins partiellement transparente dans le visible, présentant un troisième indice de réfraction proche dudit premier indice de réfraction, ladite couche de fermeture recouvrant ladite première couche et lesdites au moins une première couche réflective métallique et au moins une première couche réflective transparente, de telle sorte que ladite couche de fermeture soit en contact direct avec ladite première couche dans toutes les zones de ladite première couche sans éléments réfléchissants opaques ou transparents,
- le composant optique de sécurité présentant en réflexion, un effet visuel dynamique obtenu par rotation en tilt du composant.

Les étapes de dépôt de la couche réflective transparente et de la couche réflective métallique peuvent être interverties.

Selon un ou plusieurs exemples de réalisation, le procédé comprend en outre une étape d'application d'une couche adhésive sur ladite couche de fermeture.

Selon un ou plusieurs exemples de réalisation, la couche de fermeture forme une couche adhésive.

### BREVE DESCRIPTION DES FIGURES

D'autres caractéristiques et avantages de l'invention apparaîtront à la lecture de la description qui suit, illustrée par les figures suivantes :
- les FIGS. 1A et 1B, des exemples de composants optiques de sécurité selon la présente description, vus en coupe ;
- les FIG. 2A - 2D, des schémas illustrant la superposition ou la juxtaposition des couches réflectives opaque et transparente;
- les FIGS. 3A à 3D, respectivement deux exemples d'éléments visuels « creux » et « plein », un exemple de composant optique de sécurité, vu en coupe, intégrant les éléments visuels illustrés sur les FIGS. 3A et 3B et l'effet visuel animé résultant (FIG. 3D) ;
- la FIG. 4, un autre exemple d'un effet visuel résultant d'un composant optique selon la présente description.

### DESCRIPTION DETAILLEE

Sur les figures, les éléments ne sont pas représentés à l'échelle pour une meilleure visibilité.

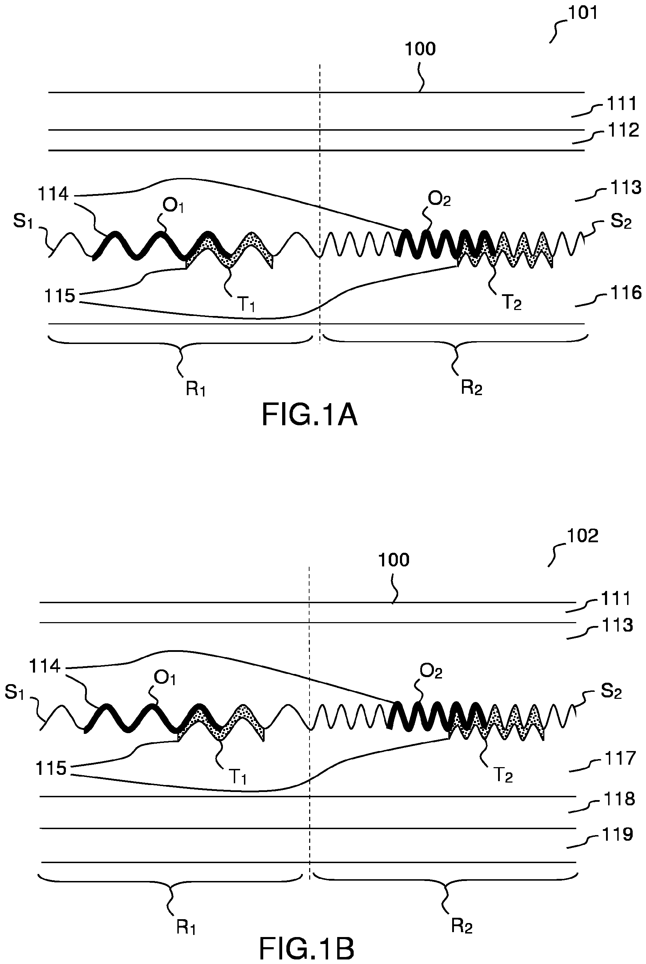

Les FIGS. 1A et 1B représentent selon des vues en coupe (partielles) deux exemples de composants optiques de sécurité selon la présente description.

Le composant optique de sécurité 101 représenté sur la FIG. 1A représente par exemple un composant optique de sécurité destiné à être transféré sur un document ou un produit en vue de sa sécurisation. Il comprend selon cet exemple un film support 111, par exemple un film en matériau polymère, par exemple un film en polyéthylène téréphtalate (PET) de quelques dizaines de micromètres, typiquement 15 à 100 µm, ainsi qu'une couche de détachement 112 (optionnelle), par exemple en cire naturelle ou synthétique. La couche de détachement permet de retirer le film support en polymère 111 après transfert du composant optique sur le produit ou document à sécuriser.

Le composant optique de sécurité 101 comprend par ailleurs une première couche 113 en matériau diélectrique, au moins partiellement transparente dans le visible, présentant un premier indice de réfraction n₁. Dans l'exemple de la FIG. 1A, la première couche 113 comprend une première région R1 uniformément microstructurée pour former une première microstructure diffractive SI et une deuxième région uniformément microstructurée pour former une deuxième microstructure S2.

Des exemples de microstructures seront décrites plus en détails par la suite.

Par exemple, dans l'exemple de la FIG. 1A, la première microstructure SI comprend un premier réseau, unidimensionnel ou bidimensionnel, et la deuxième microstructure S2 comprend un deuxième réseau, unidimensionnel ou bidimensionnel, différent du premier réseau.

Par uniformément microstructurée, on comprend que la microstructure de l'ensemble de la couche 113 est microstructurée par une structure continue.

Bien entendu, le composant optique de sécurité peut comprendre un nombre plus important de régions, ou une seule région, une région étant définie par une microstructure uniforme.

Dans l'exemple de la FIG. 1A, le composant optique de sécurité 101 comprend également une couche réflective métallique 114 déposée sur la première et sur la deuxième région microstructurée et formant dans chacune des régions un ou plusieurs éléments réfléchissants opaques Oᵢ, chaque élément réfléchissant opaque présentant dans au moins une direction une dimension strictement inférieure à 1 mm. La couche réflective métallique 114 est ainsi discontinue. Le composant optique de sécurité 101 comprend par ailleurs une couche réflective transparente 115, en matériau diélectrique, présentant un deuxième indice de réfraction n₂, déposée sur la première et la deuxième région microstructurée et formant dans chacune des régions un ou plusieurs éléments réfléchissants transparents Tᵢ, chaque élément réfléchissant transparent présentant une dimension minimale supérieure à 2 mm. La couche réflective transparente 115 est ainsi discontinue.

Dans l'exemple de la FIG. 1A, le composant optique de sécurité 101 comprend également une couche de fermeture 116, en matériau diélectrique, au moins partiellement transparente dans le visible, présentant un troisième indice de réfraction n₃ et recouvrant ladite première couche 113 et lesdites au moins une première couche réflective métallique 114 et au moins une première couche réflective transparente 115.

L'indice de réfraction n₃ est proche du premier indice de réfraction n₁, ce qui permet, dans les zones dans lesquelles il n'y a pas de couche réflective métallique ou transparente, d'assurer une complète transparence du composant optique de sécurité, la microstructure n'étant plus visible.

La couche de fermeture 116 peut par ailleurs former une couche adhésive ou une couche de protection.

Le composant optique de sécurité peut comprendre par ailleurs une ou plusieurs couches (non représentées sur la FIG. 1A) non fonctionnelles optiquement mais adaptées à l'application, par exemple, une couche d'adhésif si la couche 116 ne forme pas déjà une couche adhésive, par exemple une couche d'adhésif réactivable à chaud, pour le transfert du composant optique de sécurité sur le produit ou document.

Selon un exemple de réalisation particulier, la couche de détachement 112 peut être discontinue, par exemple pour la formation d'une étiquette. Par ailleurs, la couche adhésive peut présenter un pouvoir adhérent permanent de sorte qu'un support intermédiaire est utilisé pour permettre la manipulation du composant avant son application sur le document ou le produit à protéger.

En pratique, comme cela sera détaillé par la suite, le composant optique de sécurité peut être fabriqué en empilant les couches sur le film support 111, puis le composant est transféré sur un document/produit à sécuriser grâce à la couche d'adhésif. Optionnellement, le film support 111 peut alors être détaché, par exemple au moyen de la couche de détachement 112. La face principale d'observation 100 du composant optique de sécurité se trouve ainsi du côté de la première couche 113 opposé à la face gravée de la couche 113.

Les 2 couches réflectives 114 et 115 présentent une zone de chevauchement. La couche opaque 114 est placée au-dessus de la couche 115. Une construction telle que la couche 115 soit située au-dessus de la couche 114 est également possible.

Le composant optique de sécurité 102 représenté sur la FIG. 1B représente par exemple un composant optique de sécurité destiné à la sécurisation de billets de banque ; il s'agit par exemple d'une partie d'un fil de sécurité destiné à être intégré dans le papier pendant la fabrication du billet. Dans cet exemple, le composant 102 comprend comme précédemment un film support 111 (12 à 25 µm) qui servira également de film de protection au fil de sécurité, et, comme dans l'exemple de la FIG. 1A, une première couche 113 en matériau diélectrique présentant un premier indice de réfraction n₁, ladite couche 113 étant uniformément structurée sur l'ensemble de chacune des régions R1, R2.

Le composant optique de sécurité 102 comprend également, comme précédemment, la couche réfléchissante opaque 114 discontinue et la couche réfléchissante transparente 115 discontinue pour former chacune, sur chacune des régions, au moins un premier élément réfléchissant opaque et un premier élément réfléchissant transparent.

Le composant optique de sécurité 102 comprend par ailleurs, dans l'exemple de la FIG. 1B, un ensemble des couches 117, 118, 119, respectivement la couche de fermeture 117, une couche de contraste colorée opaque 118 facultative et une couche de protection 119, par exemple un deuxième film polymère ou un vernis. Comme dans l'exemple précédent, la fabrication peut être réalisée par empilement des couches sur le film support 111. La couche de protection 119 est ensuite déposée pour donner au fil de sécurité la solidité nécessaire. Les couches de contraste colorée 118 et de protection 119 sont optionnelles; elles peuvent également ne former qu'une seule couche avec la couche de fermeture 117.

Il apparaitra à l'homme du métier que d'autres couches non fonctionnelles optiquement peuvent être ajoutées en fonction des besoins de l'application dans chacun des exemples représentés sur les FIGS. 1A et 1B.

A noter que si les couches additionnelles, non fonctionnelles optiquement, par exemple la couche adhésive, ou les couches de contraste 119 et de protection 119, sont transparentes, ainsi que le support de destination, le composant optique de sécurité pourra être visible des deux côtés.

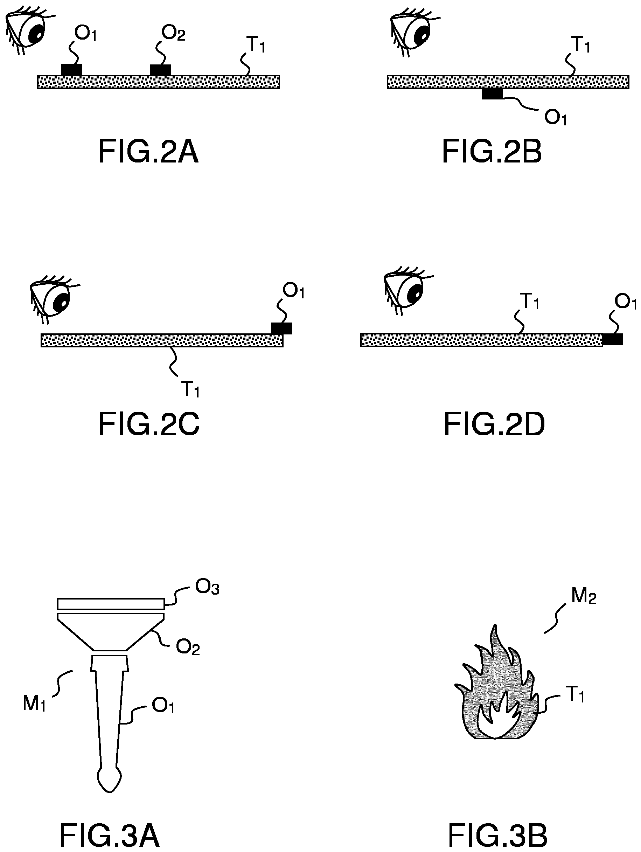

Les FIG. 2A - 2D illustrent des exemples illustrant la superposition ou la juxtaposition des couches réflectives opaque et transparente. Les couches sont vues en coupe selon une direction. Les couches réflectives opaque et transparente sont discontinues dans les deux directions pour former les éléments optiques réfléchissants Oᵢ et Tᵢ. Sur les figures, les couches réflective et opaque peuvent être superposées l'une sur l'autre dans les deux sens.

Sur les FIGS 2A - 2D, la barre avec des pointillés correspond à la couche réflective transparente, et la barre noire correspond à la couche réflective métallique. La couche réflective transparente est discontinue (dans les deux directions) pour former un élément réfléchissant transparent T₁. L'œil symbolise la face d'observation.

Dans un premier cas (superposition), illustré par les FIGS. 2A et 2B, l'intersection est large : un élément réflectif transparent englobe largement un ou plusieurs éléments réfléchissants opaques.

La Figure 2C représente le cas d'un chevauchement de l'élément réfléchissant transparent et de l'élément réfléchissant opaque.

Dans l'exemple de la FIG. 2D, c'est une juxtaposition.

Les FIGS. 3A à 3D illustrent un exemple de composant optique selon la présente description et l'effet visuel animé résultant, à savoir un flambeau olympique, avec ou sans la flamme. Dans cet exemple, le composant optique de sécurité comprend dans une première région une microstructure uniforme, de type microstructure diffractante, par exemple un réseau linéaire à une dimension ou deux dimensions, dont le pas est compris entre 200 nm et 5 µm, en fonction de l'effet de diffraction recherché. Par exemple, le pas est choisi entre 500 nm et 600 nm pour obtenir une diffraction à l'ordre +1. La couche réflective métallique discontinue forme des éléments réfléchissants opaques O1 - O3 qui contribuent à former un premier motif M1 (la vasque sans flamme) et la couche réflective transparente discontinue forme un élément réflectif transparent T1 qui contribue à former un deuxième motif M2 (la flamme).

La FIG. 3A représente le premier motif M1 (la vasque sans flamme). On observe en réflexion spéculaire un aspect métal brillant opaque, et à l'ordre 1 de diffraction, un aspect coloré iridescent intense ; en dehors de ces angles d'observation, l'aspect observé est opaque. La vasque est donc visible en permanence.

La FIG. 3B représente le deuxième motif M2, la flamme Olympique. On observe en réflexion spéculaire un aspect transparent légèrement brillant et à l'ordre 1 de diffraction, un aspect coloré iridescent fort (dont l'intensité est généralement inférieure à celle du premier élément graphique). En dehors de ces zones angulaires, un aspect transparent non lumineux rend le composant quasiment invisible à l'observation. La flamme n'est visible qu'à l'ordre 1 de diffraction et plus légèrement en observation spéculaire.

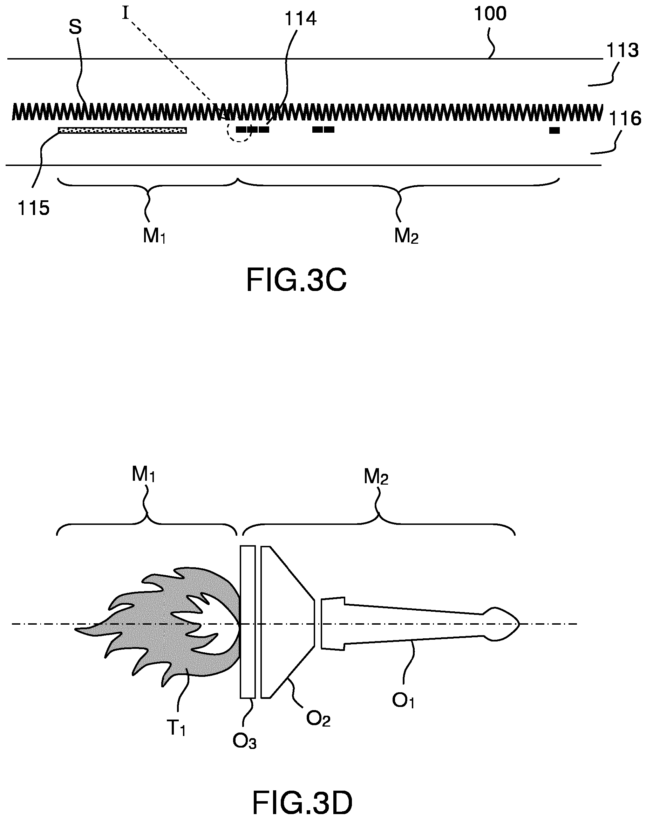

Ainsi, comme illustré sur la FIG. 3D, un basculement du document autour d'un axe perpendiculaire à la direction du vecteur réseau permet de visualiser l'allumage iridescent de la flamme dans la vasque aux différents ordres de diffraction.

La FIG. 3C illustre un exemple de composant optique de sécurité, vu en coupe, intégrant les éléments réfléchissants illustrés sur les FIGS. 3A et 3B.

Seules les couches fonctionnelles essentielles sont indiquées sur ce schéma.

Les couches réfléchissantes sont indiquées par des traits noirs et en grisé selon la nature de la couche réflective et sa transparence (respectivement opaque et transparent).

On notera que les zones opaques sont discrètes (discontinues). La représentation exagère leur dimension latérale qui est strictement inférieure à 1 mm, de préférence inférieure à 0,6 mm.

Les zones réfléchissantes transparentes sont des surfaces élémentaires dont la plus petite dimension est strictement supérieure à 2 mm, de préférence supérieure à 3 mm.

Au point indiqué par la lettre I, les 2 couches réflectives se prolongent sans interruption de manière à montrer sans ambiguïté l'uniformité de la microstructure.

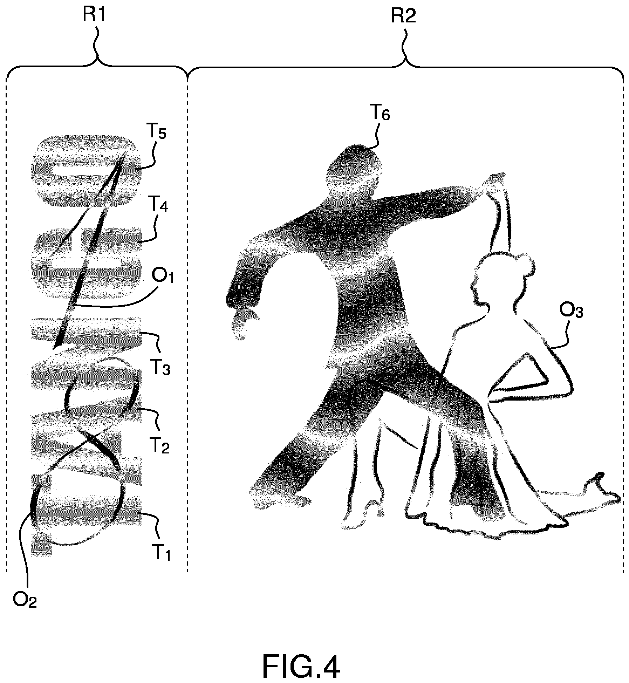

La FIG. 4 illustre l'effet visuel obtenu avec un autre exemple d'un composant optique de sécurité comprenant 2 régions notées respectivement R1 et R2. Dans chacune de ces régions sont schématisés des éléments réfléchissants opaques Oi et des éléments réfléchissants transparents Ti. Dans cet exemple, chaque région est caractérisée par une microstructure différente. Les microstructures différentes dans chacune des régions permettent de générer des effets optiques différents.

Dans le cas illustré ici, la première microstructure (région R1) comprend une première structure diffractive formée d'un bas-relief avec un ensemble de facettes dont les formes sont déterminées pour générer une pluralité d'éléments réflectifs cylindriques concaves ou convexes vu de la face d'observation, lesdits éléments réflectifs cylindriques présentant une direction principale. La première microstructure présente un effet visuel dynamique de « bandes lumineuses défilantes » lorsque le document subit une rotation en tilt autour d'un axe parallèle à la direction principale des éléments réflectifs cylindriques. Cet effet est décrit plus en détails dans le brevet FR3019497 au nom de la déposante.

Cette première structure diffractive est modulée dans l'exemple de la FIG. 4, région R1, par un premier réseau diffractif, unidimensionnel ou bidimensionnel.

Par exemple il s'agit d'un réseau de diffraction à un ordre non nul, par exemple un réseau de diffraction à un ordre non nul, de pas compris entre 300 nm et 5 µm.

Selon un deuxième exemple, il peut s'agir d'un réseau sub longueur d'onde, de pas compris entre 200 nm et 500 nm, agissant après dépôt de la couche réflective transparente ou de la couche réflective métallique et encapsulation par la couche de fermeture, comme un filtre résonant. Les mécanismes physiques ne sont cependant pas les mêmes dans le cas du revêtement par une couche diélectrique haut indice ou par une couche métallique. Dans les deux cas, on observe une réflexion colorée à l'ordre zéro mais les couleurs sont différentes. Ce mécanisme résonant s'accompagne par ailleurs dans le cas d'un réseau unidimensionnel d'une variation de couleur par rotation azimutale du composant, du fait de la sensibilité du mécanisme physique à la polarisation de la lumière incidente.

Dans l'exemple du composant optique de sécurité décrit sur la FIG. 4, la première région R1 permet donc les observations suivantes : les éléments réfléchissants opaques O1 et O2 (formant respectivement le chiffre « 1 » et le chiffre « 8 ») formés par le dépôt local de la couche réflective métallique, sont vus quel que soit l'angle d'observation. Ils apparaissent comme des éléments sombre pour un observateur. Ils forment un « premier message ».

Par ailleurs, on observe un effet visuel dynamique commun aux éléments réfléchissants opaques (O1, O2) et transparents (T1 - T5), les éléments réfléchissants transparents formant les lettres « T », « A », « N », « G », « O ». Cet effet visuel dynamique comprend le déplacement d'une ligne de forte luminosité obtenu pour un mouvement autour d'un axe parallèle à un axe horizontal du document. Il s'accompagne (cas d'un réseau sub longueur d'onde) en réflexion spéculaire d'un effet coloré à la fois pour les éléments réfléchissants transparents et opaques, cet effet coloré résultant d'un effet de guide d'onde dans la couche réflective transparente (filtre résonant soustractif diélectrique) et d'un effet plasmonique au niveau de la couche métallique. L'effet visuel dynamique est obtenu pour une rotation du document suivant un des axes du document. Les éléments réfléchissants forment ainsi un « deuxième message ». En fonction de la période du réseau, il est possible également d'avoir un effet de diffraction à un ordre supérieur et ainsi un effet coloré iridescent ou partiellement iridescent.

Dans l'exemple de la FIG. 4, la deuxième microstructure (région R2) comprend une deuxième structure diffractive comprenant plusieurs « modules » agencés côte à côte, chaque module comprenant comme dans l'exemple précédent un bas-relief avec un ensemble de facettes dont les formes sont déterminées pour simuler un élément optique visible en réflexion, avec, comme dans l'exemple précédent, au moins une région convexe et/ou au moins une région concave. La deuxième microstructure présente en réflexion et sous l'effet d'un mouvement de tilt autour d'un axe parallèle à ladite direction d'agencement des modules, un effet visuel dynamique comprenant le mouvement d'un ou plusieurs éléments graphiques complexes. Dans l'exemple de la FIG. 4, on observe ainsi le déplacement d'une ligne courbe de forte luminosité lorsque le composant optique de de sécurité subit une rotation en tilt autour d'un axe parallèle à la direction d'agencement des modules. Cet effet est décrit plus en détails dans le brevet FR3066954 au nom de la déposante.

Comme dans le cas de la région R1, cette deuxième structure diffractive est modulée dans l'exemple de la FIG. 4, région R2, par un deuxième réseau diffractif, par exemple un deuxième réseau sub longueur d'onde, qui peut être unidimensionnel ou bidimensionnel.

Dans l'exemple du composant optique de sécurité décrit sur la FIG. 4, la deuxième région R2 permet donc les observations suivantes : l'élément réfléchissant opaque O3 (formant le contour d'une danseuse) formé par le dépôt local de la couche réflective métallique, est vu quel que soit l'angle d'observation. Il apparait comme un élément graphique sombre pour un observateur. Il forme le « premier message ».

Par ailleurs, on observe un effet visuel dynamique commun à l'élément réfléchissant opaque (O3) et à l'élément réfléchissant transparent T6 formant dans cet exemple un danseur. Cet effet visuel dynamique comprend le déplacement d'une ligne courbe de forte luminosité obtenu pour un mouvement autour d'un axe horizontal du document. Il s'accompagne (cas d'un réseau sub longueur d'onde) en réflexion spéculaire d'un effet coloré à la fois pour les éléments réfléchissants transparents et opaques, cet effet coloré résultant d'un effet de guide d'onde dans la couche réflective transparente et d'un effet plasmonique au niveau de la couche métallique. Comme précédemment, en fonction de la période du réseau, il est possible également d'avoir un effet de diffraction à un ordre supérieur et ainsi un effet coloré iridescent ou partiellement iridescent L'effet visuel dynamique est obtenu pour une rotation du document suivant un des axes du document. On observe ainsi un « deuxième message ».

Le tableau ci-dessous présente d'autres exemples de microstructures exploitables et leurs effets. Cette liste n'est pas exhaustive et l'homme du métier sera capable de les substituer par d'autres microstructures éligibles.

Dans le tableau ci-dessous, on appelle « iridescent » un effet de changement de couleur continu passant par les différentes couleurs du spectre lumineux de l'arc en ciel lorsque le document est soumis à une rotation suivant un angle de tilt.

On appelle « partiellement iridescent », un effet de changement de couleur continu passant par les différentes couleurs et couvrant une portion du spectre lumineux de l'arc en ciel (par exemple du bleu au jaune). Ce type d'effet est obtenu par exemple pour des réseaux sub-longueurs d'ondes dont l'ordre 1 est bien souvent incomplet et visible uniquement pour de très fortes inclinaisons du document.

Dans le tableau ci-dessous, les effets visuels sont observés en réflexion sur le recto. Selon la nature du substrat de l'objet à sécurisé et la transparence des couches formant le composant optique de sécurité, il sera possible également d'observer des effets en réflexion côté verso et/ou en transmission.

| Microstructure | Nature de la couche réflective | Effet visuel en réflexion spéculaire | Effet visuel autour d'un angle de diffraction à un ordre non nul (e.g. ordre ±1) | Effet visuel hors des angles de diffraction et de réflexion spéculaire |
|---|---|---|---|---|
| Réseau diffractif Ordre non nul, e.g. ordre ±1 1D ou 2D | Métallique | Métal brillant | Iridescent | Sombre |
| | Transparente | Invisible | Iridescent (moins intense que sur métal) | Invisible |
| Réseau diffractif ordre zéro 1D ou 2D | Métallique | Métal (coloré) | Partiellement iridescent | Sombre |
| | Transparente | Coloré | Partiellement iridescent | Invisible |
| Structure de type bas-relief pour effet visuel dynamique | Métallique | Métallique blanc | Lumineux dynamique | Sombre |
| | Transparente | Réflectif blanc | Lumineux dynamique | Invisible |
| Structure de type bas-relief pour effet visuel dynamique modulée avec réseau de diffraction ordre zéro | Métallique | Métallique coloré | Coloré dynamique | Sombre |
| | Transparente | Réflectif coloré | Coloré dynamique | Invisible |

Selon des exemples de réalisation non limitatifs, les composants optiques de sécurité selon la présente description peuvent être obtenus avec les étapes suivantes.

Dans une première étape, la première couche microstructurée diffractive Z est formée (113, FIGS 1A, 1B) sur une couche support (ou film support) (couche 111, FIGS. 1A, 1B). La couche support est par exemple une couche en polymère, par exemple de type film polyester (PET), ou PC, PVC, PS, PP (d'épaisseur de 12 à 100 µm). La micro structuration est obtenue par exemple par gaufrage d'une couche thermo formable couchée sur le film support, ou dépôt d'une couche durcissable, moulage, puis réticulation de la couche.

Dans une deuxième étape, le dépôt localisé de la couche réflective métallique 114 est réalisé de manière connue. Par exemple, le dépôt est fait
o par impression d'un vernis soluble correspondant au négatif du motif que l'on souhaite conserver, puis dépôt sous vide sur l'ensemble de la surface d'une couche métallique, puis lavage de la couche soluble qui entraîne localement la disparition de la couche réflective ;
o ou par dépôt sous vide d'une couche métallique sur l'ensemble de la surface, impression d'un vernis de protection, dissolution dans un bain de soude de la couche métallique dans les zones non protégées

Dans une troisième étape, le dépôt localisé de la couche réflective transparente est réalisé de manière connue. Par exemple, le dépôt est fait par impression d'un vernis soluble correspondant au négatif du motif que l'on souhaite conserver, puis dépôt sous vide sur l'ensemble de la surface d'une couche réflective transparente, puis lavage de la couche soluble qui entraîne localement la disparition de la couche réflective pour former les éléments réfléchissants transparents.

On notera que les deuxième et troisième étapes peuvent être interverties.

Une quatrième étape (optionnelle) de dépôt selon les connaissances de l'homme du métier d'une couche de fermeture et/ou de protection chimique et/ou de bas indique optique, traditionnellement réalisée par enduction peut être réalisée.

Une cinquième étape (optionnelle) de dépôt selon les connaissances de l'homme du métier d'une couche adhésive réactivable à chaud. Alternativement, une couche d'adhésif transfert ou une couche d'adhésif permanent et de son protecteur siliconé peuvent également être déposées.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité (101, 102) destiné à être observé en réflexion, à l'œil nu, selon au moins une première face d'observation (100), comprenant :
- une première couche (113) en matériau diélectrique, au moins partiellement transparente dans le visible, présentant un premier indice de réfraction (n₁), ladite première couche comprenant au moins une première région (R₁) uniformément microstructurée pour former une première microstructure diffractive (S₁);
- au moins une première couche réflective métallique (114), déposée sur ladite au moins une première région microstructurée et formant un ou plusieurs éléments réfléchissants opaques (Oᵢ), chaque élément réfléchissant opaque formant un trait avec une largeur strictement inférieure à 1 mm, l'ensemble comprenant le ou les éléments réfléchissants opaques formant un premier élément graphique reconnaissable ;
- au moins une première couche réflective transparente (115), en matériau diélectrique, présentant un deuxième indice de réfraction (n₂), déposée sur ladite au moins une première région microstructurée et formant un ou plusieurs éléments réfléchissants transparents (Tᵢ), une dimension minimale de chaque élément réfléchissant transparent étant supérieure à 2 mm, l'ensemble comprenant le ou les éléments réfléchissants transparents formant un deuxième élément graphique reconnaissable ;
- une couche de fermeture (116, 117), en matériau diélectrique, au moins partiellement transparente dans le visible, présentant un troisième indice de réfraction (n₃) proche du premier indice de réfraction (n₁), recouvrant ladite première couche (113) et lesdites au moins une première couche réflective métallique (114) et au moins une première couche réflective transparente (115), de telle sorte que ladite couche de fermeture soit en contact direct avec ladite première couche dans les zones de ladite première couche sans éléments réfléchissants opaques ou transparents,
- le composant optique de sécurité présentant, en réflexion, un effet visuel dynamique obtenu par rotation en tilt du composant.

2. Composant optique de sécurité selon la revendication 1, dans lequel dans ladite au moins une première région, ladite au moins une première couche réflective métallique et ladite au moins une première couche réflective transparente se recouvrent partiellement, de telle sorte qu'au moins un élément réfléchissant opaque et un élément réfléchissant transparent soient partiellement superposés.

3. Composant optique de sécurité selon l'une quelconque des revendications précédentes, dans lequel dans ladite au moins une première région, ladite au moins une première couche réflective métallique et ladite au moins une première couche réflective transparente sont localement juxtaposées, de telle sorte qu'au moins un élément réfléchissant opaque et un élément réfléchissant transparent soient localement juxtaposés.

4. Composant optique de sécurité selon l'une quelconque des revendications précédentes, dans lequel ladite au moins une première microstructure comprend un premier réseau de diffraction constant sur toute ladite première région.

5. Composant optique de sécurité selon la revendication 4, dans lequel ledit premier réseau de diffraction est un réseau sub-longueur d'onde, déterminé pour produire, après dépôt de ladite au moins une première couche réflective transparente, un filtre résonant dans une première bande spectrale.

6. Composant optique selon l'une quelconque des revendications 4 ou 5, dans lequel ledit premier réseau présente une diffraction à un ordre non nul.

7. Composant optique selon l'une quelconque des revendications 4 à 6, dans lequel ladite première microstructure comprend une première structure diffractive modulée par ledit premier réseau.

8. Composant optique de sécurité selon l'une quelconque des revendications précédentes, dans lequel :
- ladite première couche (113) comprend au moins une deuxième région (R₂) uniformément microstructurée pour former une deuxième microstructure (S₂) ;
- ladite au moins une première couche réflective métallique (114) est déposée sur ladite au moins une deuxième région microstructurée pour former un ou plusieurs éléments réfléchissants opaques, chaque élément réfléchissant opaque formant un trait avec une largeur strictement inférieure à 1 mm ;
- ladite au moins une première couche réflective transparente (115) est déposée sur ladite au moins une deuxième région microstructurée pour former un ou plusieurs éléments réfléchissants transparents, une dimension minimale de chaque élément réfléchissant transparent étant supérieure à 2 mm .

9. Composant optique de sécurité selon la revendication 8, dans lequel ladite première microstructure comprend un premier réseau de diffraction constant sur toute ladite première région et ladite au moins une deuxième microstructure comprend un deuxième réseau de diffraction constant sur toute ladite deuxième région, au moins un paramètre desdits premier et deuxième réseaux étant différent.

10. Objet sécurisé, par exemple document de valeur sécurisé, comprenant un substrat et un composant optique de sécurité selon l'une quelconque des revendications précédentes, déposé sur ledit substrat.

11. Procédé de fabrication d'un composant optique de sécurité destiné à être observé en réflexion, à l'œil nu, selon une face d'observation, comprenant :
- une étape de formation d'une première couche (113) en matériau diélectrique, au moins partiellement transparente dans le visible, présentant un premier indice de réfraction (n₁), ladite première couche étant uniformément microstructurée dans au moins une première région pour former une première microstructure diffractive ;
- une étape de dépôt localisé d'au moins une première couche réflective métallique (114) pour former un ou plusieurs éléments réfléchissants opaques, chaque élément réfléchissant opaque formant un trait avec une largeur strictement inférieure à 1 mm, l'ensemble comprenant le ou les éléments réfléchissants opaques formant un premier élément graphique reconnaissable;
- une étape de dépôt localisé d'au moins une couche réflective transparente (115) en matériau diélectrique, présentant un deuxième indice de réfraction (n₂), pour former un ou plusieurs éléments réfléchissants transparents, une dimension minimale de chaque élément réfléchissant transparent étant supérieure à 2 mm, l'ensemble comprenant le ou les éléments réfléchissants transparents formant un premier élément graphique reconnaissable;
- une étape de dépôt d'une couche de fermeture (116), en matériau diélectrique, au moins partiellement transparente dans le visible, présentant un troisième indice de réfraction (n₃) proche dudit premier indice de réfraction (n₁), ladite couche de fermeture recouvrant ladite première couche et lesdites au moins une première couche réflective métallique (114) et au moins une première couche réflective transparente (115), de telle sorte que ladite couche de fermeture soit en contact direct avec ladite première couche dans les zones de ladite première couche sans éléments réfléchissants opaques ou transparents ;
- le composant optique de sécurité présentant, en réflexion, un effet visuel dynamique obtenu par rotation en tilt du composant.

## Patentansprüche

1. Optische Sicherheitskomponente (101, 102), die dazu bestimmt ist, von mindestens einer ersten Betrachtungsseite (100) aus mit dem bloßen Auge bei Reflektion sichtbar zu sein, die aufweist:
- eine erste Schicht (113) aus dielektrischem Material, die im sichtbaren Bereich zumindest teilweise transparent ist, mit einem ersten Brechungsindex (n₁), wobei die erste Schicht mindestens einen ersten gleichmäßig mikrostrukturierten Bereich (R₁) aufweist, um eine erste diffraktive Mikrostruktur (S₁) zu bilden
- mindestens eine erste metallische reflektierende Schicht (114), die auf dem mindestens einen ersten mikrostrukturierten Bereich angeordnet ist und ein oder mehrere opake reflektierende Elemente (Oᵢ) bildet, wobei jedes opake reflektierende Element eine Linie mit einer Breite von strikt weniger als 1 mm bildet, wobei die Gesamtheit aus dem oder den opaken reflektierenden Elementen ein erstes erkennbares grafisches Element bildet;
- mindestens eine erste transparente reflektierende Schicht (115) aus dielektrischem Material mit einem zweiten Brechungsindex (n₂), die auf dem mindestens einen ersten mikrostrukturierten Bereich angeordnet ist und ein oder mehrere transparente reflektierende Elemente (Tᵢ) bildet, wobei eine Mindestgröße jedes transparenten reflektierenden Elements mehr als 2 mm beträgt, wobei die Gesamtheit aus dem oder den transparenten reflektierenden Elementen ein zweites erkennbares grafisches Element bildet;
- eine Schließschicht (116, 117) aus dielektrischem Material, die im sichtbaren Bereich zumindest teilweise transparent ist, mit einem dritten Brechungsindex (n₃), der nahe dem ersten Brechungsindex (n₁) ist, und welche die erste Sicht (113) und die mindestens eine erste metallische reflektierende Schicht (114) und die mindestens eine erste transparente reflektieren Schicht (115) so bedeckt, dass die Schließschicht in den Zonen der ersten Schicht ohne opake oder transparente reflektierende Elemente in direktem Kontakt mit der ersten Schicht steht,
- wobei die optische Sicherheitskomponente bei Reflektion eine dynamische visuelle Wirkung aufweist, die durch eine Kippdrehung der Komponente erzielt wird.

2. Optische Sicherheitskomponente nach Anspruch 1, wobei sich in dem mindestens einen ersten Bereich die mindestens eine erste metallische reflektierende Schicht und die mindestens eine erste transparente reflektierende Schicht teilweise so überdecken, dass mindestens ein opakes reflektierendes Element und ein transparentes reflektierendes Element teilweise überlagert sind.

3. Optische Sicherheitskomponente nach einem der vorstehenden Ansprüche, wobei in dem mindestens einen ersten Bereich die mindestens eine erste metallische reflektierende Schicht und die mindestens eine erste transparente reflektierende Schicht lokal nebeneinanderliegen, so dass mindestens ein opakes reflektierendes Element und ein transparentes reflektierendes Element lokal nebeneinanderliegen.

4. Optische Sicherheitskomponente nach einem der vorstehenden Ansprüche, wobei die mindestens eine erste Mikrostruktur ein erstes konstantes Beugungsgitter auf dem gesamten ersten Bereich aufweist.

5. Optische Sicherheitskomponente nach Anspruch 4, wobei das erste Beugungsgitter ein Subwellenlängengitter ist, das dazu bestimmt ist, nach dem Aufbringen der mindestens einen ersten transparenten reflektierenden Schicht einen Resonanzfilter in einem ersten Spektralband zu erzeugen.

6. Optische Sicherheitskomponente nach einem der Ansprüche 4 oder 5, wobei das erste Gitter eine Brechung mit einer von Null verschiedenen Ordnung aufweist.

7. Optische Sicherheitskomponente nach einem der Ansprüche 4 bis 6, wobei die erste Mikrostruktur eine erste diffraktive Struktur aufweist, die durch das erste Gitter moduliert wird.

8. Optische Sicherheitskomponente nach einem der vorstehenden Ansprüche, wobei:
- die erste Schicht (113) mindestens einen zweiten gleichmäßig mikrostrukturierten Bereich (R₂) aufweist, um eine zweite Mikrostruktur (S₂) zu bilden;
- die mindestens eine erste metallische reflektierende Schicht (114) auf dem mindestens einen zweiten mikrostrukturierten Bereich angeordnet ist, um ein oder mehrere opake reflektierende Elemente zu bilden, wobei jedes opake reflektierende Element eine Linie mit einer Breite von strikt weniger als 1 mm bildet;
- die mindestens eine erste transparente reflektierende Schicht (115) auf dem mindestens einen zweiten mikrostrukturierten Bereich angeordnet ist, um ein oder mehrere transparente reflektierende Element zu bilden, wobei eine Mindestgröße jedes transparenten reflektierenden Elements mehr als 2 mm beträgt.

9. Optische Sicherheitskomponente nach Anspruch 8, wobei die erste Mikrostruktur ein erstes konstantes Beugungsgitter auf dem gesamten ersten Bereich aufweist, und die mindestens eine zweite Mikrostruktur ein zweites konstantes Beugungsgitter auf dem gesamten zweiten Bereich aufweist, wobei mindestens ein Parameter des ersten und des zweiten Gitters unterschiedlich ist.

10. Gesichertes Objekt, z. B. gesichertes Wertdokument, das ein Substrat und eine auf dem Substrat angeordnete optische Sicherheitskomponente nach einem der vorstehenden Ansprüche aufweist.

11. Verfahren zur Herstellung einer optischen Sicherheitskomponente, die dazu bestimmt ist, von mindestens einer ersten Betrachtungsseite aus mit dem bloßen Auge bei Reflektion sichtbar zu sein, das umfasst:
- einen Schritt zum Bilden einer ersten Schicht (113) aus dielektrischem Material, die im sichtbaren Bereich zumindest teilweise transparent ist, mit einem ersten Brechungsindex (n₁), wobei die erste Schicht in mindestens einem ersten Bereich gleichmäßig mikrostrukturiert ist, um eine erste diffraktive Mikrostruktur zu bilden;
- einen Schritt zum lokalisierten Aufbringen mindestens einer ersten metallischen reflektierenden Schicht (114), um ein oder mehrere opake reflektierende Element zu bilden, wobei jedes opake reflektierende Element eine Linie mit einer Breite von strikt weniger als 1 mm bildet, wobei die Gesamtheit aus dem oder den opaken reflektierenden Elementen ein erstes erkennbares grafisches Element bildet;
- einen Schritt zum lokalisierten Aufbringen mindestens einer ersten transparenten reflektierenden Schicht (115) aus dielektrischem Material mit einem zweiten Brechungsindex (n₂), um ein oder mehrere transparente reflektierende Elemente zu bilden, wobei eine Mindestgröße jedes transparenten reflektierenden Elements mehr als 2 mm beträgt, wobei die Gesamtheit aus dem oder den transparenten reflektierenden Elementen ein zweites erkennbares grafisches Element bildet;
- einen Schritt zum Aufbringen einer Schließschicht (116) aus dielektrischem Material, die im sichtbaren Bereich zumindest teilweise transparent ist, mit einem dritten Brechungsindex (n₃), der nahe dem ersten Brechungsindex (n₁) ist, wobei die Schließschicht die erste Sicht und die mindestens eine erste metallische reflektierende Schicht (114) und die mindestens eine erste transparente reflektierten Schicht (115) so bedeckt, dass die Schließschicht in den Zonen der ersten Schicht ohne opake oder transparente reflektierende Elemente in direktem Kontakt mit der ersten Schicht steht;
- wobei die optische Sicherheitskomponente bei Reflektion eine dynamische visuelle Wirkung aufweist, die durch eine Kippdrehung der Komponente erzielt wird.

## Claims

1. An optical security component (101, 102) intended to be observed in reflection, with the naked eye, along at least one first observation face (100), comprising:
- a first layer (113) of dielectric material, which is at least partially transparent in the visible range, having a first refractive index (n₁), said first layer comprising at least one first region (R₁) that is uniformly microstructured so as to form a first diffractive microstructure (S₁);
- at least one first metallic reflective layer (114), which is deposited on said at least one first microstructured region and forms one or more opaque reflective elements (Oᵢ), each opaque reflective element forming a line with a width that is strictly smaller than 1 mm, the assembly comprising the one or more opaque reflective elements forming a first recognizable graphical element;
- at least one first transparent reflective layer (115), made of dielectric material, having a second refractive index (n₂), which is deposited on said at least one first microstructured region and forms one or more transparent reflective elements (Tᵢ), a minimum dimension of each transparent reflective element being greater than 2 mm, the assembly comprising the one or more transparent reflective elements forming a second recognizable graphical element;
- a cover layer (116, 117), made of dielectric material, which is at least partially transparent in the visible range, having a third refractive index (n₃) close to the first refractive index (n₁), covering said first layer (113) and said at least one first metallic reflective layer (114) and at least one first transparent reflective layer (115), such that said cover layer is in direct contact with said first layer in the areas of said first layer without opaque or transparent reflective elements,
- the optical security component exhibiting, in reflection, a dynamic visual effect obtained by tilting the component.

2. The optical security component according to Claim 1, wherein, in said at least one first region, said at least one first metallic reflective layer and said at least one first transparent reflective layer partially overlap, such that at least one opaque reflective element and one transparent reflective element are partially superposed.

3. The optical security component according to either one of the preceding claims, wherein, in said at least one first region, said at least one first metallic reflective layer and said at least one first transparent reflective layer are locally juxtaposed, such that at least one opaque reflective element and one transparent reflective element are locally juxtaposed.

4. The optical security component according to any one of the preceding claims, wherein said at least one first microstructure comprises a first diffraction grating that is constant over all of said first region.

5. The optical security component according to Claim 4, wherein said first diffraction grating is a subwavelength grating, determined so as to produce, after deposition of said at least one first transparent reflective layer, a resonant filter in a first spectral band.

6. The optical component according to either one of Claims 4 and 5, wherein said first grating exhibits non-zeroth order diffraction.

7. The optical component according to any one of Claims 4 to 6, wherein said first microstructure comprises a first diffractive structure modulated by said first grating.

8. The optical security component according to any one of the preceding claims, wherein:
- said first layer (113) comprises at least one second region (R₂) that is uniformly microstructured so as to form a second microstructure (S₂);
- said at least one first metallic reflective layer (114) is deposited on said at least one second microstructured region so as to form one or more opaque reflective elements, each opaque reflective element forming a line with a width that is strictly smaller than 1 mm;
- said at least one first transparent reflective layer (115) is deposited on said at least one second microstructured region so as to form one or more transparent reflective elements, a minimum dimension of each transparent reflective element being greater than 2 mm.

9. The optical security component according to Claim 8, wherein said first microstructure comprises a first diffraction grating that is constant over all of said first region and said at least one second microstructure comprises a second diffraction grating that is constant over all of said second region, at least one parameter said first and second gratings being different.

10. A secure object, for example a secure document of value, comprising a substrate and an optical security component according to any one of the preceding claims, deposited on said substrate.

11. A method for manufacturing an optical security component intended to be observed in reflection, with the naked eye, along an observation face, comprising:
- a step of forming a first layer (113) of dielectric material, which is at least partially transparent in the visible range, having a first refractive index (n₁), said first layer being uniformly microstructured in at least one first region so as to form a first diffractive microstructure;
- a step of locally depositing at least one first metallic reflective layer (114) so as to form one or more opaque reflective elements, each opaque reflective element forming a line with a width that is strictly smaller than 1 mm, the assembly comprising the one or more opaque reflective elements forming a first recognizable graphical element;
- a step of locally depositing at least one transparent reflective layer (115) of dielectric material, having a second refractive index (n₂), so as to form one or more transparent reflective elements, a minimum dimension of each transparent reflective element being greater than 2 mm, the assembly comprising the one or more transparent reflective elements forming a first recognizable graphical element;
- a step of depositing a cover layer (116), made of dielectric material, which is at least partially transparent in the visible range, having a third refractive index (n₃) close to the first refractive index (n₁), said cover layer covering said first layer and said at least one first metallic reflective layer (114) and at least one first transparent reflective layer (115), such that said cover layer is in direct contact with said first layer in the areas of said first layer without opaque or transparent reflective elements,
- the optical security component exhibiting, in reflection, a dynamic visual effect obtained by tilting the component.
